# EUROPEAN PATENT SPECIFICATION

(11) **EP 1 575 300 B1**
(45) Date of publication and mention of the grant of the patent: **12.05.2010**
(21) Application number: 05101828.1
(22) Date of filing: 09.03.2005
(51) Int. Cl.: H04N 7/26

(54) **System and method for controlling bit rate of an image**
Vorrichtung und Verfahren zum Regeln der Bitrate eines Bildes
Dispositif et méthode pour régulation du débit binaire d'une image

(30) Priority: 10.03.2004 KR 2004016114
(43) Date of publication of application: 14.09.2005
(73) Proprietor: LG Electronics, Inc., Seoul 150-875 (KR)
(72) Inventor: Kang, Byoung Su, Seoul (KR); Park, Ki Su, Seoul (KR); Yoon, Doe Hyun, Seoul (KR)
(74) Representative: Ekström, Nils

(56) References cited:
- EP-A- 1 195 992
- EP-A- 1 315 380
- US-A- 5 724 100

## Description

### BACKGROUND OF THE INVENTION

### Field of the Invention

The present invention relates to a telecommunications system and, more particularly, to a method for controlling a bit rate of an image for preventing deterioration of image quality.

### Description of the Related Art

In a general wireless telecommunications environment, when image data containing a large amount of information is transferred through a channel with limited bandwidth, a bit rate control method is used for transferring the data. The amount of data transferred is controlled according to variable network condition s.

The bit rate can be controlled based on a forward technique and a backward technique. The forward technique assigns a bit rate by considering characteristics of an inputted image. The backward technique determines parameters of an encoder by considering characteristics of rear parts of a source encoder, for instance, a transfer rate status of an output buffer.

Video encoders for use in low-speed transfer media such as video telecommunications and videophones should have high compression efficiency and low complexity. Therefore, most of the bit rate control techniques for the video encoders for use in low-speed transfer media adopt the backward technique that controls a bit rate by adjusting a quantization parameter (QP) in based on a buffer status.

The bit rate can be adjusted by using encoding parameters such as the quantization parameter. For example, when the quantization parameter value is increased, the bit rate decreases and the image quality is decreased. In contrast, when the quantization parameter value is decreased, the bit rate increases and the image quality improves. Thus, a reduction in the bit rate causes det erioration of the image quality.

Such bit rate adjustment method can be classified mainly into a method of skipping a frame in a frame layer or a method of adjusting a quantization parameter value in the unit of a macroblock. The first mentioned bit rate adjustment method in the frame layer skips a frame by checking a buffer state until the frame is bit rate become less than a reference bit rate This skipping technique prevents buffer overflow. For example, the TMN10 bit rate adjustment method uses a small buffer since the TMN10 bit rate adjustment method is applied for a real - time transfers.

The second mentioned bit rate adjustment method in the macroblock layer performs a bit rate adjustment and an encoding by estimating the number of bits of frame s to be encoded based on the bit rate adjustment model and adjusting the quantization parameter in the macroblock unit. Afterwards, parameters used in the bit rate adjustment model are renewed.

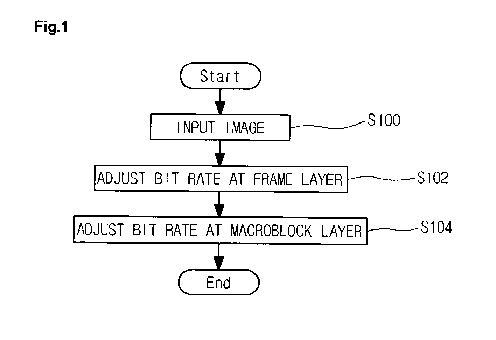

Fig. 1 is a flowchart of a bit rate adjustment method in accordance with the related art. As shown, when an inputted image is received in real -time at operation 100, a buffer state is checked in a frame layer. Then, the frame is skipped until being less than a reference bit rate at operation 102. Then, another bi t rate adjustment at a macroblock layer is carried out at operation 104. More specifically, after the bit rate adjustment at the frame layer S102, the number of bits of the frame to be encoded is estimated. Then, a value of the quantization parameter is adjusted in the macroblock unit at the macroblock layer, thereby adjusting the bit rate.

Herein, in view of the bit rate control, the frame layer refers to a point of time determining whether to perform the skipping in the frame unit based on the number of bits generated during an encoding of a precedent frame prior to performing an encoding in the macroblock unit. The macroblock layer refers to an encoding of each macroblock performed after the step of skipping the frame.

However, the above-described bit rate control method adjusts the quantization parameter individually in the macroblock layer to adjust the bit rate to maximize bandwidth. Thus, in case where images in the frames include lots of motion, there may be difficulty in obtaining a target bit ra te even if the quantization parameter value is set maximum. Also, for the image with lots of motion, bits are generated in much higher quantity during the encoding . Thus, the quantization parameter is set high so as to matched the target bit rate. As a result, image quality of the frame may become degraded.
A method and system are needed to overcome the above problems.

### SUMMARY OF THE INVENTION

The invention is set out in the appended claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a flowchart of a method for controlling a bit rate of an input image in accordance with the related art .

Fig. 2 is a block diagram illustrating an apparatus for controlling a bit rate of an input image in accordance with a n embodiment of the invention.

Fig. 3 is a flowchart of a method for controlling a bit rate of an input image in accordance with one embodiment of the invention .

Fig. 4 is a flowchart of a method for controlling a bit rate of a motion picture in accordance with the preferred embodiment of the pres ent invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

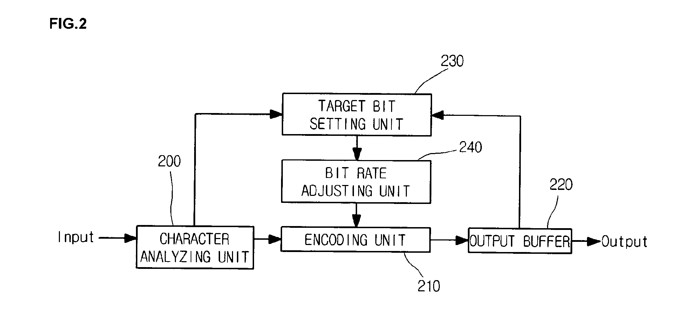

Referring to Fig. 2, the apparatus for controlling a bit rate comprises: a characteristic analyzing unit 200 for analyzing a characteristic of an inputted image; an encoding unit 210 for encoding the inputted image; an output buffer 220 for outputting an encoded image signal in form of a bit stream; a target bit setting unit 230 for allocating a target bit based on an inputted image state and a state of the output buffer 220; and a bi t rate adjusting unit 240 for adjusting an encoding bit rate of the encoding unit 210 to the allocated target bit.

In the bit rate control apparatus, the inputted image goes through the characteristic analyzing unit 210 and is then encoded by the encoding unit 220. Afterwards, the encoded image signal is temporarily stored into the output buffer 230 and outputted in form of a bit stream. In one embodiment, the characteristic analyzing unit 200 analyzes a characteristic of a received image data and determines whether the inputted image is a motion picture or a static picture. The characteristic analyzing unit 210 informs the target bit setting unit 230 of a result. The characteristic analyzing unit 210 resets a target bit with respect to the inputted image based on the characteristic of the inputted image and the state of the output buffer 220, for example.

The bit rate adjusting unit 240 adjusts a bit rate of the encoding unit 210 according to the newly set target bit by the target bit setting unit 230. The bit rate adjusting unit 240 carries out different bit rate control modes depending on a status of the inputted image, i.e., whether the inputted image is a motion picture or a static picture.

If the inputted image is a static picture, the bit rate ad justing unit 240 adjusts a quantization parameter individually in the unit macroblock unit, thereby adjusting an output bit rate of the encoding unit 210. On the contrary, if the inputted image is a motion picture, the bit rate adjusting unit 240 adjusts an output bit rate of the encoding unit 210 by allocating a predetermined fixed quantization parameter with respect to the whole macroblock of the inputted image.

In case of the motion picture, since the bit rate is adjusted in the unit of a frame, the bit rate adjusting unit 240 allocates a predetermined specific quantization parameter with respect to the whole macroblock of the frame. That is, in accordance with one embodiment of the invention, a specific quantization parameter fixed with the same value at a frame layer is set. As a result, instead of setting the quantization parameter value per macroblock, the entire frame is encoded. The frame may comprise one or more entire macroblocks with a quantization parameter value predetermined at the frame la yer.

In the quantization parameter, there are several motion levels classified according to an output bit rate, and the quantization parameter, which is fixed, is adaptively compensated with a different weight value for each motion level. As a result of t his adaptive compensation, the bit rate control is carried out more effectively. For instance, assuming that the motion level is classified into a high level, a medium level and a low level, if the motion level is high, a higher value of the fixed quantization parameter is allocated and, as the motion level becomes lower descending in order of the middle level and the low level, a much lower value of the fixed quantization parameter is allocated.

In case of the static picture, the bit rate is adjusted per macroblock. When the inputted image is the static picture, the bit rate control mode adopted by the TMN10 is used , for example. That is, the bit rate is controlled through controlling a buffer at the frame layer and setting a quantization parameter value for each macroblock. Also, for one or more macroblocks, the number of bits of the frame to be encoded is estimated based on a bit rate control model ; and the quantization parameter is adjusted in the macroblock unit. Hence, the encoding and the bit rate control are performed simultaneously. Parameters used for the bit rate control model are renewed, in one or more embodiments .

The frame layer determin es whether to a frame based on the number of bits generated during an encoding of a precedent frame and before encoding the present unit. The macroblock layer refers to encoding of the individual macroblocks after skipping a frame unit.

Moreover, the bit rate is controlled to be close to a target bit through skipping the frame. Also, at the macroblock la yer, the macroblock quantization parameter used for encoding each of the macroblocks is adjusted to control the bit rate more precisely.

According to the preferred embodiment of the present invention, in case of the motion picture, the quantization parameter value is identical to all of the macroblocks of the frame. On the other hand, for the static picture, the quantization parameter value is individually adjusted for each of the macroblocks.

The encoding unit 210 encodes the image data transferred through the characteristic analyzing unit 200 based on the adjusted quantization parameter at the bit rate adjusting unit 240. Thus, an encoding bit rate of the frame is adjusted and then, the encoded data is stored into the output buffer 220. That is, if the inputted image is determined to be a static picture, the encoding is carried out by employing a bit rate control mode for the static picture. If the inputted image is a motion picture, the encoding is carried out by employing a bit rate control mode for the motion picture.

The output buffer 220 is calibrated to output a bit stream in a consistent speed in order to transfer a variable bit stream through a channel with limited bandwidth. The output buffer 220 serves a role in preventing a buffer overflow or deficiency problem typically occurring when the bit stream is restored. In case of the motion picture, the bit rate increases because the encoding unit 210 encodes the image data with the same quantization parameter value throughout. Hence, there may be a risk of overflow at the output buffer 210. Thus, in one embodiment, the bit rate adjusting unit 240 executes the adjustment such that the input frame is skipped as many as the occurrence of the overflow can be impaired.

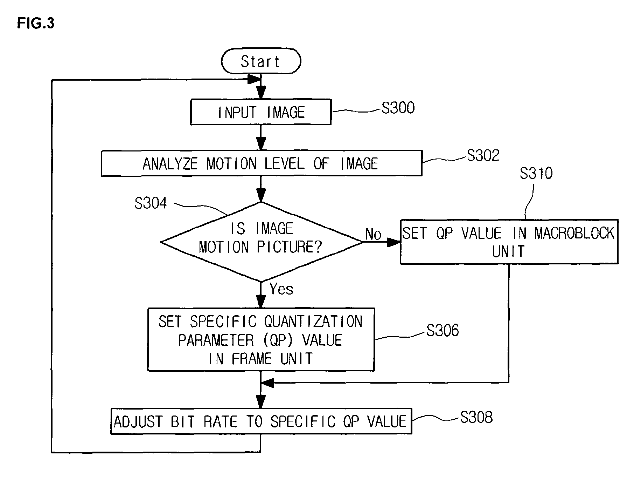

Fig. 3 is a flowchart of a metho d for controlling a bit rate of an inputted image in accordance with the preferred embodiment of the present invention.

As depicted in Fig. 3, as an image is inputted in real -time (S300), a level of motion of the inputted image is determined (S302). It is then determined whether the inputted image is a motion picture (S304) . The determination of the motion picture is based on the number of intra-blocks in consideration of a correlation with a precedent frame. That is, if the inputted image has a high lev el of motion, the number of intra -blocks is greater than that of inter - blocks. Thus, if the number of generated intra -blocks is greater than a predetermined threshold value, it is determined that the inputted image has lots of motion and, if the number of intra - blocks is less than the predetermined threshold value, the inputted image is determined as a static image.

If the inputted image is determined as a motion picture (S304), a specific quantization parameter value in the unit of a frame is set (S306). Based on the specific quantization parameter value, an encoding bit rate of the image data is adjusted (S308) . Detailed description of the bit rate control method for an image with a high motion level will be provided later.

If the determination in opera tion 304 indicates that the inputted image is a static picture, a quantization parameter value is set in the unit of a macroblock in operation 310 and then, the set quantization parameter value is used to adjust an encoding bit rate of the image frame.

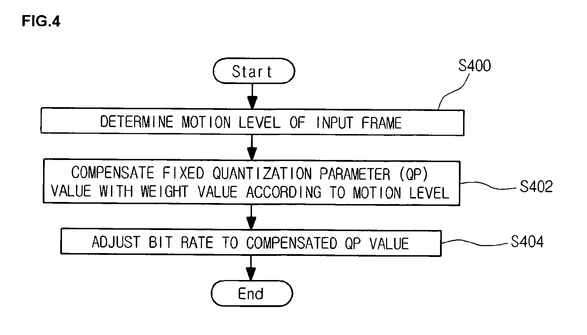

Fig. 4 is a flowchart of a method for controlling a bit rate of an image with lots of motion in accordance with an embodiment of the invention. As shown, if the inputted image is determined as a motion picture (S400), a level of motion is determined according to the outputted number of bits. A weight value set by the motion level is a value proportional to the motion level or the number of bits.

After the motion level of the input frame is determined, a specific quantization parameter value compensated with the weight value according to the number of bits is set by compensating a predetermined fixed quantization parameter value with a certain weight value corresponding to the determined motion level (S402).

An output bit rate of the inputted image is adjusted based on the specific quantization parameter value compensated with the certain weight ed value (S404). The weight compensation is preferably executed by adding the weight value corresponding to the motion level and the fixed quantization parameter value.

The motion picture may be divided into a plurality of motion levels . In one embodiment, the motion picture is divided into high, mid level and low motion levels according to the determined motion level. For example, the encoding bit rate of the image frame may be controlled according to the three motion levels by using three fixed quantization parameter values.

In one embodiment, if a frame is determined to have a motion level, the frame is encoded with a quantization parameter value for the purpose of providing good image quality. A plurality of motion levels are scaled according to the number of bits generated during an encoding of the frame, and the fixed quantization parameter value is applied with a weight value set differently for each motion lev el, thereby adaptively determining a plurality of fixed quantization parameter values according to the differently scaled motion levels. Therefore, the encoding bit rate can be controlled with an enhanced efficiency. Also, an image that does not correspond to a range of the above scaled motion level s can be set to be excluded from the condition for the image with the high motion level.

Hereinafter, a bit rate control method for a static image is provided. The bit rate control mode for a static picture is set to a skipping mode for preventing the buffer overflow problem based on an output buffer state. In an exemplary embodiment, the bit rate control method employs the TMN10 bit rate adjustment method.

After skipping a frame, if a fixed quantization value at a macroblock is zero, for example, the inputted image is determined to be a static picture. Thus, based on the TMN bit rate adjustment model, the number of bits of the frame to be encoded is estimated, and a new quantization parameter value is adjust ed individually in the unit of a macroblock, thereby executing the bit rate adjustment and the encoding simultaneously.

In some embodiments , after the frame skipping operation an image classification operation is performed for the next frame. A bit rate control operation may be also performed, in accordance with one embodiment .

After the frame skipping operation (with respect to a static picture for example), a motion level of the next frame is determined . When there are lots of motion s, quantization parameter values for one or more macroblocks of the frame are allocated based on the same value. At this time, a motion status flag is set to reflect a high motion level. The employed fixed quantization parameter value and the motion level can vary depending on system implementation .

For example, if the number of bits of a subsequent frame is greater than a threshold value which is set as a target bit, the bit rate control method for an image with a high motion level is employed. However, if the encoded bit value is less than the threshold value, the motion status is changed to a stationary status and the encoding is carried by employing the bit rate control method for the static picture.

In accordance with another embodiment , when the motion status flag of a frame is approximately the same as the previous frame, a predetermined set parameters are used for the motion picture or the static picture by setting the motion status of an image as a stationary status or a motion status.

In a preferred embodiment of th e invention, an inputted image is classified into a motion picture and a static picture depending on a level of motion and, a bit rate control method is applied to the classified image. Hence, where the inputted image in a high motion status at the same bit rate, it is possible to improve image quality.

If the inputted image has lots of motion, the frame is encoded with a fixed quantization parameter value and thus, the image quality within the frame remains consistent. Elimination of the image quality variations provides for a clearer and higher quality images.

It will be apparent to those skilled in the art that various modifications and variations can be made in the present invention. Thus, it is intended that the present invention covers the modificati ons and variations of this invention provided they come within the scope of the appended claims and their equivalents.

## Claims

1. Method for controlling an image encoding bit rate, **characterized in that** the method comprises the following steps:
- determining a motion level of an input image by computing the number of intra blocks of the input image (S302);
- classifying the input image as a motion image or a static image according to the determined motion level (S304); and
- when the input image is classified as a motion image, allocating a quantization parameter value to the input image (S306), and when the input image is classified as a static image, allocating quantization parameter values individually to each macro-block of the input image (S310).

2. Method according to claim 1, wherein the input image is classified as a motion image when the number of intra-blocks is greater than a threshold value.

3. Method according to claim 2, wherein a plurality of motion levels are scaled according to the number of bits generated during an encoding of the frame.

4. Method according to claim 3, wherein a weight value, set differently for each motion level, is applied to the quantization parameter value for the image classified as a motion image.

5. Method according to claim 1, wherein the input image is classified as a static image when the number of intra-blocks is less than a threshold value.

6. Method according to anyone of the above claims, wherein the bit rate is adjusted depending on the allocated quantization parameter (S308).

7. Apparatus for controlling an image encoding bit rate, **characterized in that** the apparatus comprises:
- a character analyzing means (200) for classifying an input image into a motion image or a static image according to a motion level, said motion level being determined by computing the number of intra blocks of the input image;
- a target bit setting means (230) for allocating a target bit based on a result of the classifying of the input image and a state of an output buffer (220); and
- a bit rate adjusting means (240) for adjusting an encoding bit rate of an encoding unit (210) by setting a quantization value for a whole input image or each macro-block of the input image according to the result of the classifying.

8. Apparatus according to claim 7, wherein the input image is classified as a motion image when the number of intra-blocks is greater than a threshold value.

9. Apparatus according to claim 7, wherein the input image is classified as a static image when the number of intra-blocks is less than a threshold value.

10. Apparatus for controlling an image encoding bit rate, **characterized in that** the apparatus is arranged to be operated by a method according to anyone of claims 1-6.

## Patentansprüche

1. Verfahren zum Steuern einer Bildcodierungs-Bitrate, **dadurch gekennzeichnet, dass** das Verfahren folgende Schritte aufweist:
- Bestimmen des Bewegungsniveaus eines Eingangsbilds durch Berechnen der Anzahl der Intra-Blöcke des Eingangsbilds (S302),
- Klassifizieren des Eingangsbilds als ein Bewegtbild oder als ein statisches Bild entsprechend dem bestimmten Bewegungsniveau (S304) und
- wenn das Eingangsbild als ein Bewegtbild klassifiziert wurde, Zuordnen eines Quantisierungsparameterwerts zu dem Eingangsbild (S306), und wenn das Eingangsbild als ein statisches Bild klassifiziert wurde, Zuordnen von Quantisierungsparameterwerten einzeln zu jedem Makroblock des Eingangsbilds (S310).

2. Verfahren nach Anspruch 1, wobei das Eingangsbild als ein Bewegtbild klassifiziert wird, wenn die Anzahl der Intra-Blöcke größer als ein Schwellenwert ist.

3. Verfahren nach Anspruch 2, wobei mehrere Bewegungsniveaus entsprechend der Anzahl der während einer Codierung des Rahmens erzeugten Bits skaliert werden.

4. Verfahren nach Anspruch 3, wobei ein für jedes Bewegungsniveau verschieden festgelegter Gewichtswert auf den Quantisierungsparameterwert für das als ein Bewegtbild klassifizierte Bild angewendet wird.

5. Verfahren nach Anspruch 1, wobei das Eingangsbild als ein statisches Bild klassifiziert wird, wenn die Anzahl der Intra-Blöcke kleiner als ein Schwellenwert ist.

6. Verfahren nach einem der vorhergehenden Anspräche, wobei die Bitrate abhängig von dem zugeordneten Quantisierungsparameter eingestellt wird (S308).

7. Vorrichtung zum Steuern der Bildcodierungs-Bitrate, **dadurch gekennzeichnet, dass** die Vorrichtung aufweist:
- eine Zeichenanalysiereinrichtung (200) zum Klassifizieren eines Eingangsbilds als ein Bewegtbild oder ein statisches Bild entsprechend dem Bewegungsniveau, wobei das Bewegungsniveau durch Berechnen der Anzahl der Intra-Blöcke des Eingangsbilds bestimmt wird,
- eine Zielbit-Festlegungseinrichtung (230) zum Zuordnen eines Zielbits auf der Grundlage des Ergebnisses der Klassifizierung des Eingangsbilds und des Zustands eines Ausgangspuffers (220), und
- eine Bitraten-Einstelleinrichtung (240) zum Einstellen der Codierungsbitrate einer Codiereinheit (210) durch Festlegen des Quantisierungswerts eines Gesamteingangsbilds oder jedes Makroblocks des Eingangsbilds entsprechend dem Ergebnis der Klassifizierung.

8. Vorrichtung nach Anspruch 7, wobei das Eingangsbild als ein Bewegtbild klassifiziert wird, wenn die Anzahl der Intra-Blöcke größer als ein Schwellenwert ist.

9. Vorrichtung nach Anspruch 7, wobei das Eingangsbild als ein statisches Bild klassifiziert wird, wenn die Anzahl der Intra-Blöcke kleiner als ein Schwellenwert ist.

10. Vorrichtung zum Steuern der Bildcodierungs-Bitrate, **dadurch gekennzeichnet, dass** die Vorrichtung dafür eingerichtet ist, durch ein Verfahren nach einem der Ansprüche 1 - 6 betrieben zu werden.

## Revendications

1. Procédé destiné à commander un débit binaire de codage d'image, **caractérisé en ce que** le procédé comprend les étapes suivantes consistant à :
- déterminer un niveau de mouvement d'une image d'entrée en calculant le nombre d'intra-blocs de l'image d'entrée (S302) ;
- classer l'image d'entrée comme étant une image de mouvement ou une image statique selon le niveau de mouvement déterminé (S304) ; et
- lorsque l'image d'entrée est classée comme étant une image de mouvement, attribuer une valeur de paramètre de quantification à l'image d'entrée (S306), et lorsque l'image d'entrée est classée comme étant une image statique, attribuer des valeurs de paramètre de quantification de manière individuelle à chaque macro-bloc de l'image d'entrée (S310).

2. Procédé selon la revendication 1, dans lequel l'image d'entrée est classée comme étant une image de mouvement lorsque le nombre d'intra-blocs est supérieur à une valeur de seuil.

3. Procédé selon la revendication 2, dans lequel une pluralité de niveaux de mouvement sont échelonnés selon le nombre de bits générés au cours d'un codage de la trame.

4. Procédé selon la revendication 3, dans lequel une valeur de pondération, fixée de manière différente pour chaque niveau de mouvement, est appliquée à la valeur de paramètre de quantification pour l'image classée comme étant une image de mouvement.

5. Procédé selon la revendication 1, dans lequel l'image d'entrée est classée comme étant une image statique lorsque le nombre d'intra-blocs est inférieur à une valeur de seuil.

6. Procédé selon l'une quelconque des revendications précédentes, dans lequel le débit binaire est réglé selon le paramètre de quantification attribué (S308).

7. Appareil destiné à commander un débit binaire de codage d'image, **caractérisé en ce que** l'appareil comprend :
- des moyens d'analyse de caractère (200) destinés à classer une image d'entrée comme étant une image de mouvement ou une image statique selon un niveau de mouvement, ledit niveau de mouvement étant déterminé en calculant le nombre d'intra-blocs de l'image d'entrée ;
- des moyens de réglage de bit cible (230) destinés à attribuer un bit cible sur la base d'un résultat du classement de l'image d'entrée et d'un état d'un tampon de sortie (220) ; et
- des moyens de réglage de débit binaire (240) destinés à régler un débit binaire de codage d'une unité de codage (210) en réglant une valeur de quantification pour une image d'entrée entière ou pour chaque macro-bloc de l'image d'entrée selon le résultat du classement.

8. Appareil selon la revendication 7, dans lequel l'image d'entrée est classée comme étant une image de mouvement lorsque le nombre d'intra-blocs est supérieur à une valeur de seuil.

9. Appareil selon la revendication 7, dans lequel l'image d'entrée est classée comme étant une image statique lorsque le nombre d'intra-blocs est inférieur à une valeur de seuil.

10. Appareil destiné à commander un débit binaire de codage d'image, **caractérisé en ce que** l'appareil est agencé de manière à être actionné par un procédé selon l'une quelconque des revendications 1 à 6.
